(19) **Europäisches Patentamt / European Patent Office / Office européen des brevets**

(11) **EP 4 762 947 A1**

(12) # EUROPEAN PATENT APPLICATION

(43) Date of publication:
24.06.2026 Bulletin 2026/26

(21) Application number: 24221132.4

(22) Date of filing: 18.12.2024

(51) International Patent Classification (IPC):
*A23P 10/22* (2016.01)          *A23P 10/40* (2016.01)

(52) Cooperative Patent Classification (CPC):
**A23P 10/22; A23P 10/40;** A23P 30/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **BASF SE**
**67056 Ludwigshafen am Rhein (DE)**

(72) Inventor: **The designation of the inventor has not yet been filed**

(74) Representative: **BASF IP Association**
**BASF SE**
**GBI - Z078**
**67056 Ludwigshafen (DE)**

(54) **A SUGAR-FREE POWDERED WHIPPING AGENT**

(57)    The present invention is directed to a sugar-free powdered whipping agent comprising a) at least one triglyceride, b) at least one protein and c) at least one emulsifier, wherein it also comprises d) at least one sugar reduced carrier. The invention also relates to an instant powder for making an instant powder dessert comprising the sugar-free whipping agent as well as to a food that comprises a foam that is obtained by whipping, wherein the foam comprises the sugar-free whipping agent. Moreover, the invention is directed to a process for making the sugar-free whipping agent and the use of the sugar-free whipping agent for making a food that comprises a foam that is obtained by whipping.

EP 4 762 947 A1

## Description

Technical Field

The present invention is directed to a sugar-free powdered whipping agent comprising a) at least one triglyceride, b) at least one protein and c) at least one emulsifier, wherein it also comprises d) at least one sugar-reduced carrier. The invention also relates to an instant powder for making an instant powder dessert comprising the sugar-free whipping agent as well as to a food that comprises a foam that is obtained by whipping, wherein the foam comprises the sugar-free whipping agent. Moreover, the invention is directed to a process for making the sugar-free whipping agent and the use of the sugar-free whipping agent for making a food that comprises a foam that is obtained by whipping.

Introduction / Prior Art

Whipping agents are well-known products in the food industry. Whipping agents or aerating agents are typically spraydried compositions comprising fat, one or more emulsifiers and protein. These products are found mainly in instant powder desserts. The dessert is prepared by adding a liquid to the instant powder and by whipping the resulting mixture with a mixer (e.g., Paradiescreme, a product sold by the company Dr. Oetker, Germany). The liquid can be milk or water or another liquid. Such instant formulations typically consist of sugar, a protein source like milk powder, hydrocolloids, coloring agents, flavoring agents and a whipping agent.

A whipping agent is necessary in such a formulation so that it can be aerated and so that foam can be built up and so that the air bubbles in the foam are stabilized. The resulting foam is similar to whipped dairy cream. The difference is that no dairy cream is necessary. Whipping agents can be used in formulations of powder desserts, ready-to-eat applications, cake fillings, decorating creams, and other popular applications.

The market for sugar-free food products is growing because consumers consider sugar to have negative health impacts. Furthermore, the prevalence of diabetes is rising and therefore large portions of the population needs products that fulfill the strictest sugar free requirement. Thus, there is also a need for sugar-free whipping agents which can be used to prepare corresponding sugar-free aerated food products, e.g., desserts.

Sugars-free claim is defined in the EU Regulation on health claims (CELEX 2006R1924 - EN - 13.12.2014 - 004.001 - 11). Sugars-free claim may only be made where the product contains no more than 0.5 g of sugars per 100 g or 100 ml. As per the regulation the definition of sugar is mono- and disaccharides.

There are several publications relating to whipping agents, the latter, however, always containing significant amounts of sugar. For example, WO 2010/43332 A1 (Cognis IP Management GmbH) describes a powdered whipping agent comprising, inter alia, sunflower oil, a protein, at least one emulsifier, and glucose syrup, the latter making up more than 30 % by weight or even more than 40 % by weight of the composition. However, corresponding publications for sugar-free whipping agents, let alone such that fulfill the requirement of no more than 0.5 g of sugars per 100 g or 100 ml, are not known until now.

It is known that sugar alcohols can sometimes be used instead of sugar to produce sugar-reduced products. For example, WO 2023/41641 A1 (FrieslandCampina B.V.) describes a foamer ingredient, i.e., a composition containing an entrapped gas being released during application where sugar alcohols were suggested as carrier. However, sugar alcohols have a low glass transition temperature. Therefore, sugar alcohol alone as sugar substitute cannot be used to make a free-flowing powder produced at high temperatures as would be required for a whipping agent.

Hence, it has been the problem underlying the present invention to provide a powdered whipping agent which is sugar-free, i.e. the total amount of mono- and disaccharides is less than 0.5 g per 100 g, and can be used to prepare sugar-free whipped food products as, in particular, desserts. Preferably, the performance, in particular in terms of functionality, e.g. volume and firmness, and sensory testing of a whipped product prepared by using the sugar-free whipping agent, should be comparable to one prepared by using a standard sugar-containing whipping agent.

Description of Invention

This problem has been solved by the powdered sugar-free whipping agent according to the present invention comprising

    a) at least one triglyceride,
    b) at least one protein, and
    c) at least one emulsifier,
    wherein it also comprises
    d) a sugar-reduced carrier.

As surprisingly found, the inventive sugar-free whipping agent exhibits a similar performance compared to a sugar-containing standard sugar-containing whipping agent based on glucose syrup.

Definitions:

Herein, the term "sugar-free" is used in such a way that an according product, in particular a whipping agent or a whipped product, contains less than 0.5 g of sugar per 100 g or 100 ml, wherein sugar is defined as the total amount of mono- and disaccharides.

The term "whipping agent" is defined herein as a composition which may be used to prepare a whipped, i.e., aerated, food product, e.g., a dessert.

Herein, the term "carrier" is used for at least one substance, i.e. also for mixtures of two or more substances, that encapsulates lipid particles of the at least one triglyceride a) as well as the at least one emulsifier c) and is watersoluble, i.e. an at least 30 wt. %, preferably at least 40 wt. %, more preferably at least 50 wt. % aqueous solution can be obtained at room temperature, so it can release the encapsulated material rapidly once the powdered whipping agent is added to water.

The term "sugar-reduced" in connection with the carrier is to be understood herein in such a way that the carrier contains an amount of sugar, i.e. of mono- and disaccharides, being low enough to result in less than 0.5 g of sugar per 100 g or 100 ml in the powdered whipping agent. This means e.g., that maltodextrin or dextrin, if present in the carrier, can still contain more than 0.5 g of sugar per 100 g or 100 ml as long as the final powdered whipping agent has less than 0.5 g of sugar per 100 g or 100 ml.

Herein, the term "maltodextrin" is used for a linear glucose-based polymer with a degree of polymerization above 5 glucose units on average produced by hydrolysis of starch containing amylose. This can be represented as dextrose equivalent (DE) of 20 or lower. It should be noted that even though maltose is defined as a polymer with average 5 glucose units in a chain this does not mean that maltodextrin has no mono- or disaccharides. This is because the values are based on average and in fact maltodextrin often contains very high amounts of mono- and disaccharides. Therefore, when choosing a sugar-reduced carrier one needs to choose maltodextrin with very low DE value, preferably under 10 (10 glucose units in a chain on average), to be sure that the mono- and disaccharides are low enough. Herein, the term "dextrin" is understood to be a group of low molecular weight carbohydrates produced by hydrolysis of starch containing amylopectin. Dextrin differs from maltodextrin by its branched structure. The term shall also encompass cyclo-dextrins. "Resistant" shall mean that the corresponding dextrin/s is/are resistant against digestion in the human body. Such dextrins are also known as soluble fibers.

Herein, the term "sugar alcohol" is used for a polyol which is a modified sugar molecule where the carbonyl group is reduced to a hydroxyl group.

Preferably, the at least one triglyceride comprised as component a) of the inventive whipping agent is at least one triglyceride selected from the group consisting of hydrogenated or non-hydrogenated oils or fats from palm, palm kernel, coconut, sunflower, soy bean, rape seed, olive, safflower, corn, milk, babussa and cocoa, more preferably selected from the group consisting of hydrogenated or non-hydrogenated palm oil, coconut oil, milk fat, i.e. butter fat, and palm kernel fat, even more preferably comprises or consists of non-hydrogenated coconut oil and/or non-hydrogenated palm kernel fat, and most preferably comprises or even consists of non-hydrogenated palm kernel fat such as e.g. CLSP™ 499 SG (available from Bunge Loders Croklaan B.V., The Netherlands).

At that, the content of the at least one triglyceride in the whipping agent preferably lies within the range of from 15 to 60 % by weight, more preferably of from 20 to 60 % by weight and most preferably of from 25 to 40 % by weight.

Preferably, the at least one protein comprised as component b) of the inventive whipping agent is at least one protein of animal origin selected from the group consisting of milk protein, casein, sodium caseinate, calcium caseinate, whey protein concentrate, gelatine and ovalbumin and/or at least one protein of plant origin selected from the group consisting of soy protein, soy protein hydrolysate, pea protein, wheat protein, potato protein, canola protein, chickpea protein, lentil protein, mungbean protein, yeast protein and algae protein, more preferably selected from the group consisting of pea protein, whey protein and sodium caseinate, and most preferably comprises or even consists of sodium caseinate such as e.g. Emulac® NA (available from Molkerei Meggle Wasserburg GmbH & Co.KG, Germany). As the skilled person knows, sodium caseinate and calcium caseinate can easily be prepared from acid casein by treatment of the latter with aqueous sodium hydroxide or aqueous calcium hydroxide, respectively.

At that, the content of the at least one protein in the whipping agent preferably lies within the range of from 1 to 20 % by weight, more preferably of from 3 to 6 % by weight.

Preferably, the at least one emulsifier comprised as component c) of the inventive whipping agent is at least one emulsifier selected from the group consisting of a monoglyceride of a fatty acid, a diglyceride of two fatty acids, a polyglycerol ester of a fatty acid such as a propylene glycol monostearate (known to the skilled person as PGMS, E477), an acetic acid ester of a monoglyceride of a fatty acid and/or a diglyceride of two fatty acids (known to the skilled person as ACETEM, E472a), a lactic acid ester of a monoglyceride of a fatty acid and/or a diglyceride of two fatty acids (known to the skilled person as LACTEM, E472b), a citric acid ester of a monoglyceride of a fatty acid and/or a diglyceride of two fatty acids (known to the skilled person as CITREM, E472c), a diacetyltartaric acid ester of a monoglyceride of a fatty acid and/or a diglyceride of two fatty acids (known to the skilled person as DATEM, E472e) and lecithin, wherein each fatty acid is preferably, independently of other fatty acids, either saturated or unsaturated and has 6 to 30 carbon atoms.

More preferably, the at least one emulsifier is at least one emulsifier selected from the group consisting of a monoglyceride of a fatty acid, an acetic acid ester of a monoglyceride of a fatty acid and/or a diglyceride of two fatty acids, a lactic acid ester of a monoglyceride of a fatty acid and/or a diglyceride of two fatty acids and a propylene glycol monostearate, wherein each fatty acid is preferably, independently of other fatty acids, either saturated or unsaturated and has 6 to 30 carbon atoms.

Even more preferably, the at least one emulsifier is at least one emulsifier selected from the group consisting of a monoglyceride of a fatty acid, and an acetic acid ester of a monoglyceride of a fatty acid and/or a diglyceride of two fatty acids, wherein each fatty acid is preferably, independently of other fatty acids, either saturated or unsaturated and has 6 to 30 carbon atoms, and most preferably comprises or even consists of a combination of a monoglyceride of a fatty acid such as e.g. Monomuls® 90-0 18 (a glycerol monooleate available from BASF SE, Germany) and an acetic acid ester of a monoglyceride of a fatty acid and/or a diglyceride of two fatty acids such as e.g. Lamegin® EE30 (an ACETEM available from BASF SE, Germany)

At that, the content of the at least one emulsifier in the whipping agent preferably lies within the range of from 1 to 30 % by weight, more preferably of from 5 to 20 % by weight, even more preferably of from 8 to 20 % by weight and most preferably of from 10 to 15 % by weight.

Preferably, the sugar-reduced carrier comprised as component d) of the inventive whipping agent has a low impact on the viscosity of the aqueous solution or dispersion obtained by adding the powdered whipping agent to water, since high viscosity reduces the volume that the whipping agent can achieve during whipping.

As for the inventive whipping agent, when making free-flowing powder by spray drying and similar technologies, the powder is exposed to high temperature, typically up to 80 °C. Therefore, any material with a low glass transition temperature, i.e., of below 80 °C, will become sticky when processing the powder. Hence, said sugar-reduced carrier has a glass transition temperature which is high enough, preferably of more than 80 °C such that it does not become sticky when processing the powder.

Preferably, the content of the sugar-reduced carrier in the whipping agent lies within the range of from 25 to 70 % by weight, more preferably of from 35 to 60 % by weight.

Preferably, the sugar-reduced carrier comprises at least one substance selected from the group consisting of sugar alcohols, trisaccharides and oligo-/polysaccharides, wherein preferred oligo-/polysaccharidses are beta-glucan, glucomannan, sodium alginate, modified starch, maltodextrins and dextrins and preferred trisaccharides are maltotriose and raffinose.

More preferably, the sugar-reduced carrier comprises at least one substance selected from the group consisting of sugar alcohols and oligo-/polysaccharides, wherein preferred oligo-/polysaccharidses are beta-glucan, glucomannan, sodium alginate, modified starch, maltodextrins and dextrins.

More preferably, the sugar-reduced carrier comprises at least one substance selected from the group consisting of sugar alcohols, maltodextrins and dextrins. More preferably, the sugar-reduced carrier comprises

1.1) at least one sugar alcohol and at least one maltodextrin,
2.1) at least one sugar alcohol and at least one dextrin, or
3.1) at least one sugar alcohol, at least one maltodextrin and at least one dextrin,
or even consists of
1.2) at least one sugar alcohol and at least one maltodextrin,
2.2) at least one sugar alcohol and at least one dextrin, or
3.2) at least one sugar alcohol, at least one maltodextrin and at least one dextrin.

At that, the above combination 2.1 and, even more, the above combination 2.2 are especially preferred.

The use of at least one sugar alcohol is advantageous as it can easily be dosed in liquid form, in particular as an aqueous solution, when making the whipping agent.

Alternatively, and also more preferably, the sugar-reduced carrier comprises

1.1) at least one maltodextrin,
2.1) at least one maltodextrin and at least one sugar alcohol,
3.1) at least one maltodextrin and at least one dextrin, or
4.1) at least one maltodextrin, at least one sugar alcohol and at least one dextrin,
or even consists of
1.2) at least one maltodextrin,

2.2) at least one maltodextrin and at least one sugar alcohol,
3.2) at least one maltodextrin and at least one dextrin, or
4.2) at least one maltodextrin, at least one sugar alcohol and at least one dextrin.

At that, the above combination 3.1 and, even more, the above combination 3.2 are especially preferred.

The combination of at least one maltodextrin and at least one dextrin, and optionally at least one sugar alcohol, results in a sugar-free whipping agent having a similar performance compared to a sugar-containing standard whipping agent based on glucose syrup and, additionally, being stable during storage at 20 °C and the usage of 20 °C warm milk. Alternatively, and also more preferably, the sugar-reduced carrier comprises

1.1) at least one dextrin,
2.1) at least one dextrin and at least one sugar alcohol,
3.1) at least one dextrin and at least one maltodextrin, or
4.1) at least one dextrin, at least one sugar alcohol and at least one maltodextrin,

or even consists of

1.2) at least one dextrin,
2.2) at least one dextrin and at least one sugar alcohol,
3.2) at least one dextrin and at least one maltodextrin, or
4.2) at least one dextrin, at least one sugar alcohol and at least one maltodextrin.

At that, the above combinations 2.1 and 3.1 and, even more, the above combinations 2.2. and 3.2 are especially preferred, having the same advantages as described above.

The at least one sugar alcohol is preferably at least one sugar alcohol selected from the group consisting of sorbitol, mannitol, lactitol, erythritol, xylitol, maltitol and isomalt, more preferably from the group consisting of isomalt and maltitol, and most preferably comprises or even consists of maltitol such as e.g. Maltidex L 16303 (available from Cargill, U.S.A.), wherein the content of the at least one sugar alcohol in the whipping agent preferably lies within the range of from 20 to 50 % by weight, more preferably of from 25 to 40 % by weight.

The at least one maltodextrin is preferably at least one maltodextrin having a DE value below 20, more preferably below 10 and most preferably comprises or even consists of a maltodextrin having a DE value of 6 such as e.g. Glucidex® 6 - IT 6 (available from Roquette Frères, France), wherein the content of the at least one maltodextrin in the whipping agent preferably lies within the range of from 15 to 35 % by weight, more preferably of from 20 to 30 % by weight.

The at least one dextrin is preferably at least one dextrin selected from the group consisting of resistant dextrins, more preferably of resistant dextrin from wheat, potato and maize, and most preferably comprises or even consists of at least one resistant dextrin from maize such as e.g. Nutriose® FM 06 (available from Roquette Frères, France), wherein the content of the at least one dextrin in the whipping agent preferably lies within the range of from 10 to 40 % by weight, more preferably of from 15 to 30 % by weight.

According to a first preferred embodiment, the inventive sugar-free whipping agent comprises a sugar-reduced carrier which comprises or even consists of at least one sugar alcohol and at least one dextrin, wherein i) the at least one sugar alcohol is preferably at least one sugar alcohol selected from the group consisting of isomalt and maltitol, more preferably comprises or even consists of maltitol, and the content of the at least one sugar alcohol in the whipping agent preferably lies within the range of from 20 to 50 % by weight, more preferably of from 25 to 40 % by weight, and wherein ii) the at least one dextrin is preferably at least one dextrin selected from the group consisting of resistant dextrins from wheat, potato and maize, more preferably comprises or even consists of at least one resistant dextrin from maize, and the content of the at least one dextrin in the whipping agent preferably lies within the range of from 10 to 40 % by weight, more preferably of from 15 to 30 % by weight.

According to a second even more preferred embodiment, the inventive sugar-free whipping agent comprises a sugar-reduced carrier which comprises or even consists of at least one maltodextrin and at least one dextrin, wherein i) the maltodextrin is preferably at least one maltodextrin having a DE value below 10, more preferably comprises or even consists of a maltodextrin having a DE value of 6, and the content of the at least one maltodextrin in the whipping agent preferably lies within the range of from 15 to 35 % by weight, more preferably of from 20 to 30 % by weight, and wherein ii) the at least one dextrin is preferably at least one dextrin selected from the group consisting of resistant dextrins from wheat, potato and maize, more preferably comprises or even consists of at least one resistant dextrin from maize, and the content of the at least one dextrin in the whipping agent preferably lies within the range of from 10 to 40 % by weight, more preferably of from 15 to 30 % by weight.

Any weight ratio between sugar alcohols, maltodextrins and/or dextrins in the sugar-reduced carrier can be chosen as long as the glass transition temperature of the carrier is high enough, preferably above 80 °C and the sugar content in the powdered whipping agent is less than 0.5 g of sugar per 100 g or 100 ml.

Besides components a) to d), the inventive sugar-free whipping agent may comprise at least one further, optional component e) which is preferably selected from the group consisting of water, antioxidants, monosodium phosphate, monopotassium phosphate, disodium phosphate, dipotassium phosphate, tetrasodium pyrophosphate, tetrapotassium pyrophosphate, polyphosphates, polysaccharides, sodium alginate, potassium alginate, gelatine, flavoring compounds and coloring compounds.

Preferably, the whipping agent is a powder obtainable by spray-drying, more preferably obtainable by the method of making as described herein below.

The present invention is also directed to an instant powder, preferably being sugar-free as well, for making an instant powder dessert comprising the inventive sugar-free whipping agent as described herein above and optionally further comprising one or more substances selected from the group consisting of dextrin, maltodextrin, sugar substitutes such as sugar alcohol, e.g. xylitol, sweeteners such as aspartame or acesulfame K, starch, modified starch, milk powder, hydrocolloids, polysaccharides, coloring agents and flavoring agents and, although of course not preferred, sugars, i.e., mono- and/or disaccharides such as saccharose.

Moreover, the present invention relates to a food, preferably being sugar-free as well, that comprises a foam that is obtained by whipping, wherein the foam comprises the inventive sugar-free whipping agent as described herein above, optionally further comprising one or more substances selected from the group consisting of water, milk, milk powder, whey powder, dextrin, maltodextrin, sugar substitutes such as sugar alcohol, e.g. xylitol, sweeteners such as aspartame or acesulfame K, starch, modified starch, alginate, carrageenan, locust bean gum, guar gum, xanthan, cellulose, gelatine, agar, pectin and gum arabic and, although of course not preferred, sugars, i.e., mono- and/or disaccharides such as saccharose.

Preferably, said food is a foodstuff such as a foam of all kinds. Typical foams are mousses and similar whipped desserts, ice creams, creams such as cake filling creams, whipped foams, puddings, pastry fillings and other cold creams and milkshakes.

Preferably, the food comprises the foam in an amount of 1 to 100 % by weight. Preferably, the foam comprises a continuous phase that is liquid or solid and a discontinuous phase that is gaseous, wherein the foam comprises the discontinuous phase in an amount of 10 to 90 % by volume.

The present invention is also directed to a process for making the inventive sugar-free whipping agent as described herein above comprising the following subsequent steps:

i) mixing the at least one protein, the at least one soluble fiber, the at least one maltodextrin and/or sugar alcohol and water so that a first mixture is obtained,
ii) mixing the at least one fat and the at least one emulsifier by melting such that a second mixture is obtained,
iii) dispersing the second mixture into the first mixture such that a third mixture is obtained,
iv) drying, preferably spray drying, the third mixture so that a powder is obtained, and
v) optionally cooling the powder.

Finally, the present invention relates to the use of the inventive sugar-free whipping agent as described herein above for making a food that comprises a foam that is obtained by whipping.

In the following, the present invention is depicted by means of inventive as well as comparative examples which, however, should in no way limit the scope of the present invention.

Examples

Inventive Example 1 (E1):

A first inventive, sugar-free whipping agent was prepared according to the following procedure (for amounts used see Tab. 1 below, 6.0 kg total dry weight):

i) Preparation of the water phase:
Drinking water (calculated on 45 wt. % dry matter of emulsion) was put in a double-jacketed container. Maltitol (Maltidex L 16303, being a 75 % by weight aqueous solution; available from Cargill, U.S.A.), dextrin (Nutriose® FM 06; available from Roquette Frères, France) and sodium caseinate (Emulac® NA; available from Molkerei Meggle Wasserburg GmbH & Co.KG, Germany) were added while stirring. The water phase was heated to 70 °C.

ii) Preparation of the fat and emulsifier phase:
Fat and emulsifiers were melted and heated to 65 °C. Non-hydrogenated palm kernel fat (CLSP™ 499 SG; available from Bunge Loders Croklaan B.V., The Netherlands), Lamegin® EE 30 (available from BASF SE, Germany) and Monomuls® 90-0 18 (available from BASF SE, Germany) were mixed while stirring at 65 °C.

iii) Preparation of the emulsion:

The fat and emulsifier phase were dispersed into the water phase while stirring vigorously. The temperature of the emulsion was kept at 65 ± 2 °C. The pH value of the emulsion was then checked and, if necessary, adjusted to pH 7.2 ± 0.2 with sodium hydroxide. Subsequently, homogenization was carried out in two stages (220/30 bar), pasteurized at a temperature of 76 °C and then dried on a standard spray dryer to a residual moisture content of 1 to 2 % by weight in relation to the total mass. Sample was stored for 7 days at 15 °C to reach the required crystallization.

Inventive Example 2 (E2):

A second inventive, sugar-free whipping agent - inventive Example 2 (E2) - was prepared according to the procedure as described above in Inventive Example 1 (E1) with the difference that maltodextrin DE 6 (Glucidex® 6 - IT 6; available from Roquette Frères, France) was used instead of maltitol (Maltidex L 16303; available from Cargill, U.S.A.) and that the amount of dextrin (Nutriose® FM 06; available from Roquette Frères, France) was increased (for amounts used see Tab. 1 below, 6.0 kg total dry weight).

Comparative Example (CE):

A prior art sugar-containing whipping agent - Comparative Example (CE) - was prepared according to the procedure as described above in Inventive Example 1 (E1) with the difference that glucose syrup (Glucidex® 29; available from Roquette Frères, France) was used instead of maltitol (Maltidex L 16303; available from Cargill, U.S.A.) and dextrin (Nutriose® FM 06; available from Roquette Frères, France) (for amounts used see Tab. 1 below, 6.0 kg total dry weight).

Table 1: Amounts used for preparing whipping agents (with 6.0 kg total dry weight)

|  | CE | E1 | E2 |
|---|---|---|---|
| Components | [kg] | [kg] | [kg] |
| sodium caseinate | 0.24 | 0.24 | 0.24 |
| glucose syrup | 3.1 | - | - |
| maltitol (75 % solution) | - | 2.6 | - |
| maltodextrin DE 6 | - |  | 1.4 |
| dextrin | - | 1.12 | 1.6 |
| non-hydrogenated palm kernel fat | 1.8 | 1.8 | 1.8 |
| Lamegin® EE 30 | 0.78 | 0.78 | 0.78 |
| Monomuls® 90-O 18 | 0.12 | 0.12 | 0.12 |
| water | 6.9 | 6.3 | 6.9 |

Storage of whipping agents:

The powdered whipping agents which had been prepared as described above (cf. E1, E2 and CE) were directly used to prepare a whipped cream as described below or, before that, stored at 20 °C and 50 % relative humidity for 8 or 16 weeks, respectively, at a dark place, i.e. in a climate chamber.

Preparation of whipped cream:

To prepare a whipped cream, 25 g of the according powdered whipping agent (E1, E2 or CE, respectively) and 10 g saccharose were weighed and mixed. 125 ml of long-term milk (1.5 wt. % fat) was measured in a measuring cylinder. The used milk had always the same temperature (20 °C ± 1) to exclude temperature influences. Next, the measured amount of milk was placed in the mixing bowl of a Hobart N 50 whipper (available from Hobart GmbH, Germany), the dry raw materials were added, and everything was mixed briefly with a whisk. Then, the mixture was whipped on level 3 from 3 for exactly three minutes. The mixer was then switched off, the foam was removed from the mixing bowl and filled into a glass bowl of a defined volume as bubble-free as possible for the following measurements.

Functionality and sensory testing of whipped products:

With the whipped creams which had been prepared as described above, functionality and sensory testing was performed as follows:

i) Determination of relative volume:
A glass bowl was weighed both empty and after filling with the according whipped cream (prepared as described above). The weight difference corresponded to the weight of the whipped cream with known volume and was used to calculate the relative volume. The relative volume can be expressed as milliliters (ml) per 100 g:

$$\frac{Volume\ of\ glass\ bowl\ [ml] * 100}{Net\ weight\ of\ whipped\ cream\ [g]} = ml\ per\ 100\ g$$

ii) Determination of foam firmness:
The measurement was done in a cup filled with the according whipped cream measured by using texture analyzer CT3 1500 from AMETEK Brookfield (Measuring body TA4/1000, weight 26 g, 38.1 mm Ø, 20 mm high, Turntable TA-RT-KIT) with the following measurement settings:

Trigger: 5,0 g
Deformation: 15 mm
Speed: 1,0 mm/s
Pre-Speed: 2,0 mm/s

iii) Sensory and Consistency Testing:
For each whipped cream, the sensory and consistency testing was conducted, 4 hours after preparation of the cream, by a panel of 5 trained persons having different age and gender.

Results and discussion:

The results for relative volume and foam firmness of the whipped creams are shown in the following Tab. 2, wherein the storage time relates to the storage of the whipping agents before using them to prepare the whipped creams.

Table 2: Results for relative volume and foam firmness

| Storage Time | Relative Volume [ml/100 g] | | | Foam Firmness [g] | | |
|---|---|---|---|---|---|---|
| | 0 weeks | 8 weeks | 16 weeks | 0 weeks | 8 weeks | 16 weeks |
| CE | 446 | 446 | 478 | 170 | 134 | 159 |
| E1 | 472 | 478 | 485 | 187 | 87 | 98 |
| E2 | 459 | 459 | 459 | 160 | 154 | 180 |

In terms of relative volume, there was surprisingly no significant difference in performance of the whipped creams prepared by using the inventive sugar-free whipping agent, cf. E1 and E2, compared to the whipped cream prepared by using the prior art sugar-containing whipping agent, cf. CE.
Surprisingly, in terms of foam firmness however, the performance of the whipped cream prepared with inventive whipping agent E2 (containing maltodextrin DE 6) was - after 8 or 16 weeks of prior storage of whipping agent - superior to the one prepared with the inventive whipping agent E1 (containing maltitol), such that there was no significant difference in performance obtained with inventive whipping agent E2 and the one obtained with prior art whipping agent CE - even after 16 weeks of prior storage. The performance obtained with inventive whipping agent E1, however, was still comparable to the one obtained with the prior art whipping agent CE and, thus, satisfactory. The consistency of all freshly prepared whipped creams prepared with whipping agents E1, E2 and CE without prior storage (storage time = 0 weeks) were comparable, i.e., with no visual differences. Also, the sensory was comparable for all freshly prepared whipped creams with a full and warm mouthfeel. For inventive whipping agent E2, the same applies to prior storage for 8 and even 16 weeks, i.e. consistency and sensory of the according freshly prepared whipped cream were comparable to the one prepared with prior art whipping agent CE. For inventive whipping agent E1, however, there was a certain loss in performance with prior storage for 8 or 16 weeks compared to the one prepared with prior art whipping agent CE.
With powdered whipping agents E2 and CE, another whipped cream was prepared in the same way as described for the whipped cream above but with the difference that xylit (10 g) was used instead of saccharose and water (125 ml) was used instead of milk. Relative volume and foam firmness were determined as described above and for a storage time of 0 weeks.

Table 3: Results for relative volume and foam firmness for whipped cream containing xylit; storage time = 0 weeks

|  | Relative Volume [ml/100 g] | Foam Firmness [g] |
|---|---|---|
| CE | 459 | 165 |
| E2 | 493 | 162 |

Neither in terms of relative volume nor in terms of foam firmness, a significant difference in performance between the inventive whipping agent E2 and the prior art whipping agent CE could be observed. Hence, it could be shown that the inventive whipping agent also works in a sugar-free whipped cream.

**Claims**

1.   A sugar-free powdered whipping agent comprising

a) at least one triglyceride,
b) at least one protein, and
c) at least one emulsifier,
**characterized in that** it also comprises
d) a sugar-reduced carrier.

2.   The whipping agent according to claim 1 **characterized in that** it is a powder obtainable by spray-drying.

3.   The whipping agent according to claim 1 or 2 **characterized in that** the at least one triglyceride a) is at least one triglyceride selected from the group consisting of hydrogenated or non-hydrogenated palm oil, coconut oil, milk fat, and palm kernel fat.

4.   The whipping agent according to one of the preceding claims **characterized in that** the at least one protein b) is at least one protein selected from the group consisting of pea protein, whey protein, acid casein and sodium caseinate.

5.   The whipping agent according to one of the preceding claims **characterized in that** the at least one emulsifier c) is at least one emulsifier selected from the group consisting of a monoglyceride of a fatty acid, an acetic acid ester of a monoglyceride of a fatty acid and/or a diglyceride of two fatty acids, a lactic acid ester of a monoglyceride of a fatty acid and/or a diglyceride of two fatty acids and a propylene glycol monostearate, wherein each fatty acid is preferably, independently of other fatty acids, either saturated or unsaturated and has 6 to 30 carbon atoms.

6.   The whipping agent according to one of the preceding claims **characterized in that** the sugar-reduced carrier d) has a glass transition temperature of more than 80 °C.

7.   The whipping agent according to one of the preceding claims **characterized in that** the sugar-reduced carrier d) comprises at least one substance selected from the group consisting of sugar alcohols, maltodextrins and dextrins, and preferably comprises or even consists of at least one sugar alcohol and at least one dextrin or at least one maltodextrin and at least one dextrin.

8.   The whipping agent according to claim 7 **characterized in that** the at least one sugar alcohol is at least one sugar alcohol selected from the group consisting of isomalt and maltitol, and preferably comprises or even consists of maltitol.

9.   The whipping agent according to claim 7 or 8 **characterized in that** the content of the at least one sugar alcohol in the whipping agent lies within the range of from 20 to 50 % by weight, preferably of from 30 to 40 % by weight.

10.   The whipping agent according to one of the claims 7 to 9 **characterized in that** the at least one maltodextrin is at least one maltodextrin having a DE value below 10, and preferably comprises or even consists of a maltodextrin having a DE value of 6.

**11.** The whipping agent according to one of the claims 7 to 10 **characterized in that** the content of the at least one maltodextrin in the whipping agent lies within the range of from 15 to 35 % by weight, preferably of from 20 to 30 % by weight.

**12.** The whipping agent according to one of the claims 7 to 11 **characterized in that** the at least one dextrin is at least one dextrin selected from the group consisting of resistant dextrins from wheat, potato and maize, and preferably comprises or even consists of at least one resistant dextrin from maize.

**13.** The whipping agent according to one of the claims 7 to 12 **characterized in that** the content of the at least one dextrin in the whipping agent lies within the range of from 10 to 40 % by weight, preferably of from 15 to 30 % by weight.

**14.** An instant powder, preferably being sugar-free, for making an instant powder dessert that comprises the whipping agent according to one of the claims 1 to 13.

**15.** A food, preferably being sugar-free, that comprises a foam that is obtained by whipping, wherein the foam comprises the whipping agent according to one of the claims 1 to 13.

**16.** A process for making the sugar-free whipping agent according to one of the claims 1 to 13 comprising the following subsequent steps:

 i) mixing the at least one protein, the at least one soluble fiber, the at least one maltodextrin and/or sugar alcohol and water so that a first mixture is obtained,
 ii) mixing the at least one fat and the at least one emulsifier by melting such that a second mixture is obtained,
 iii) dispersing the second mixture into the first mixture such that a third mixture is obtained,
 iv) drying, preferably spray drying, the third mixture so that a powder is obtained, and
 v) optionally cooling the powder.

**17.** The use of the sugar-free whipping agent according to one of the claims 1 to 13 for making a food that comprises a foam that is obtained by whipping.

**Europäisches Patentamt**
**European Patent Office**
**Office européen des brevets**

# EUROPEAN SEARCH REPORT

**Application Number**

EP 24 22 1132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/061896 A1 (SUZHOU JIAHE FOODS INDUSTRY CO LTD [CN]) 28 April 2016 (2016-04-28) | 1-5, 14-17 | INV. A23P10/22 A23P10/40 |
| A | * abstract; claims 1, 4, 5, 8; examples 1, 3; table 1 * | 6-13 | |
| X | CN 116 326 763 A (ZHAOQING CORUSCATE BIOLOGICAL TECH CO LTD) 27 June 2023 (2023-06-27) | 1-5,7,9, 16 | |
| A | * paragraph [0005] - paragraph [0007]; claims 1, 7,10 * | 6,8, 10-14 | |
| E | WO 2025/037018 A1 (MEGGLE GROUP GMBH [DE]) 20 February 2025 (2025-02-20) * page 1, last paragraph - page 2, paragraph 2; claims 1, 2, 9-15; examples 1, 2 * | 1-5,7-9, 14-17 | |
| X | US 6 426 110 B1 (BASA ALMARIO C [US]) 30 July 2002 (2002-07-30) * column 4, line 22 - line 32; claims 1-8, 11, 13-15; examples I-III * | 1,3-5 | |

**TECHNICAL FIELDS SEARCHED (IPC)**

A23P

The present search report has been drawn up for all claims

| Place of search | Date of completion of the search | Examiner |
|---|---|---|
| Munich | 8 May 2025 | Gaiser, Markus |

EPO FORM 1503 03.82 (P04C01)

## ANNEX TO THE EUROPEAN SEARCH REPORT
## ON EUROPEAN PATENT APPLICATION NO.

EP 24 22 1132

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2025

| Patent document cited in search report | | Publication date | Patent family member(s) | | Publication date |
|---|---|---|---|---|---|
| WO 2016061896 | A1 | 28-04-2016 | CN<br>WO | 104381473 A<br>2016061896 A1 | 04-03-2015<br>28-04-2016 |
| CN 116326763 | A | 27-06-2023 | NONE | | |
| WO 2025037018 | A1 | 20-02-2025 | NONE | | |
| US 6426110 | B1 | 30-07-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201043332 A1

- WO 202341641 A1